# EUROPEAN PATENT APPLICATION

(11) **EP 2 523 462 A2**
(43) Date of publication of application: **14.11.2012**
(21) Application number: 12161195.8
(22) Date of filing: 26.03.2012
(51) Int. Cl.: H04N 13/00

(54) **Adaptive timing controller and driving method thereof**

(30) Priority: 13.05.2011 US 201161486181 P; 28.11.2011 US 201113304941
(71) Applicant: Chimei InnoLux Corporation, Chu-Nan 350 T'ai pei (TW)
(72) Inventor: Tsai, Yung-Yu, 350 Miao-Li County (TW); Hsieh, Ming-Cheng, 350 Miao-Li County (TW)
(74) Representative: 2K Patentanwälte Blasberg Kewitz & Reichel

(57) **Abstract**

An adaptive timing controller (320), including a receiver (322), a frame buffer (324), a data format check circuit (326) and a data converting unit (328), is provided. The receiver (322) is used for receiving image data of an image frame. The frame buffer (324) is used for temporarily storing the image data. The data format check circuit (326) is used for detecting display types of the image data and a 3D display panel. The data converting unit (328) is used for rearranging the image data into rearranged image data corresponding to the display type of the 3D display panel.

## Description

This application claims the benefit of U.S. provisional application No. 61/486, 181, filed May 13, 2011, and the benefit of U.S. application No. 13/304,941, filed Nov. 28, 2011, the subject matters of which are incorporated herein by reference.

### BACKGROUND

### TECHNICAL FIELD

The invention relates in general to an adaptive timing controller and a driving method thereof.

### BACKGROUND

With the vigorous development of modern technology, people start to seek visual enjoyment more real than what 2D image devices perform. Therefore, the technology related to 3D images have become a maturing technique day by day, and the application of applying 3D glasses to view the 3D images have been popularized. Common 3D display panels with 3D glasses in the market can be roughly classified into two categories: pattern retarder (PR) type 3D display panels and shutter glasses type 3D display panels. The PR type 3D display panels display images corresponding to inputted data with a line alternative data format, and the shutter glasses type 3D display panels display images corresponding to inputted data with a frame sequential data format.

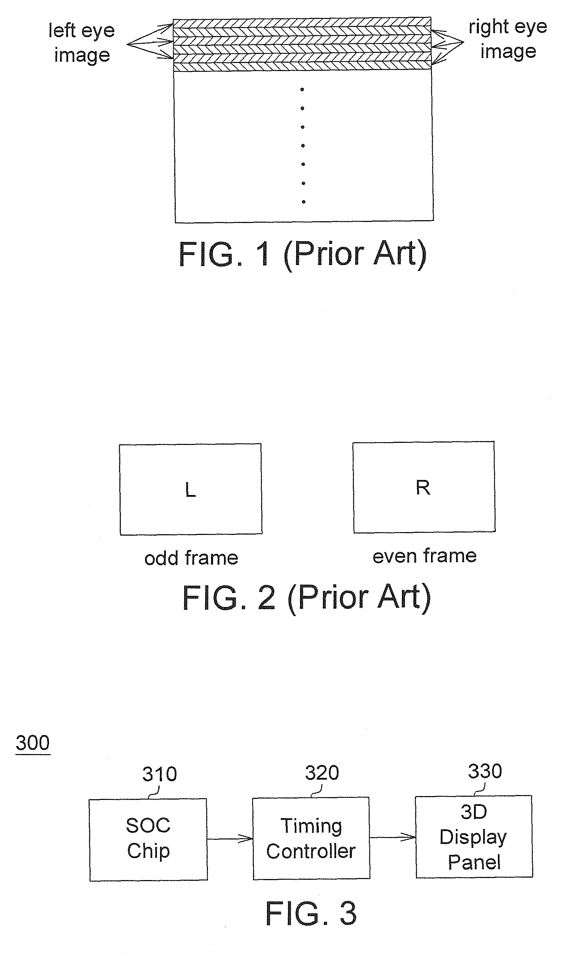

Referring to FIG. 1, a PR type 3D display panel is shown. The PR type 3D display panel displays images corresponding to inputted data with a line alternative data format. As shown in FIG. 1, an image frame includes left eye images and right eye images arranged alternately. For example, odd line images are for the left eye and even line images are for the right eye. A film is disposed on the PR type 3D display panel to respectively polarize light of the left eye images and the right eye images in different directions. Therefore, users can only see the left eye images by their left eyes and see the right eye images by their right eyes via corresponding polarizer glasses to view the 3D images.

Referring to FIG. 2, a shutter glass type 3D display panel is shown. The shutter glass type 3D display panel displays images corresponding to inputted data with a frame sequential data format. As shown in FIG. 2, image frames include left eye images and right eye images arranged in a frame sequence. For example, odd frame images are for the left eye and even frame images are for the right eye. Users can only see the left eye image frames by their left eyes and see the right eye image frames by their right eyes via corresponding shutter glasses to view the 3D images.

However, in the TV set, if a SOC chip outputs data with a line alternative data format to the panel module, the panel module should use the PR type 3D display panel so as to be capable of showing 3D images. Similarly, if the SOC chip outputs data with a frame sequential data format to the panel module, the panel module should use the shutter glasses type 3D display panel so as to be capable of showing 3D images. That is, the type of the display panel should be tied in the data format of data outputted from the SOC chip, causing the inconvenience of the manufacturers.

### SUMMARY

The disclosure is directed to an adaptive timing controller and a driving method thereof, capable of converting different data formats of different display types into a target data format of a target display type.

According to a first aspect of the present disclosure, an adaptive timing controller is provided. The adaptive timing controller includes a receiver, a frame buffer, a data format check circuit and a data converting unit. The receiver is used for receiving image data of an image frame. The frame buffer is used for temporarily storing the image data. The data format check circuit is used for detecting display types of the image data and a 3D display panel. The data converting unit is sued for rearranging the image data into rearranged image data corresponding to the display type of the 3D display panel.

According to a second aspect of the present disclosure, a driving method of an adaptive timing controller is provided. The adaptive timing controller includes a receiver, a frame buffer, a data format check circuit and a data converting unit. The driving method includes the following steps. The receiver is utilized to receive image data of an image frame. The frame buffer is utilized to temporarily store the image data. The data format check circuit is utilized to detect display types of the image data and a 3D display panel. The data converting unit is utilized to rearrange the image data into rearranged image data corresponding to the display type of the 3D display panel.

The invention will become apparent from the following detailed description of the preferred but non-limiting embodiments. The following description is made with reference to the accompanying drawings.

### BRIEF DESCRIPTION OF THE DRAWINGS

FIG. 1 shows a PR type 3D display panel.

FIG. 2 shows a shutter glass type 3D display panel.

FIG. 3 shows a schematic illustration showing a TV set according to an embodiment.

FIG. 4 shows a brief function block diagram of an adaptive timing controller according to an embodiment.

FIG. 5 shows frame image data with frame packing data format.

FIG. 6 shows frame image data with Top-Bottom data format.

FIG. 7 shows frame image data with side by side data format.

### DETAILED DESCRIPTION OF THE INVENTION

The disclosure proposes an adaptive timing controller and a driving method thereof, capable of converting different data formats of different display types into a target data format of a target display type, so as the manufacturers can select display panels of different display types with flexibility.

Referring to FIG. 3, a schematic illustration showing a TV set according to an embodiment is shown. In FIG. 3, the TV set 300 includes a SOC chip 310, an adaptive timing controller 320 and a 3D display panel 330. The SOC chip 310 may output image data with different data format corresponding to different display types to the adaptive timing controller 320. The SOC chip 310 may utilize an I2C bus, LVDS reserved bits or a TTL bus to indicate the adaptive timing controller 320 which kind of the display type of the image data is. After the adaptive timing controller 320 identifies which kind of the display type of the image data is, the adaptive timing controller 320 starts to convert the received image data into the image data with the wanted data format corresponding to the display type of the 3D display panel 330.

For example, the adaptive timing controller 320 proposed in FIG. 3 is able to automatically rearrange 3D image data arranged in the space dimension (ex. an single image frame includes left eye image data and right eye image data) into 3D image data arranged in the time dimension (ex. left eye image data and right eye image data are arranged in different image frames) for a shutter glasses type 3D display panel. On the other hand, the adaptive timing controller 320 is also able to automatically rearrange 3D image data arranged in the time/space dimension into 3D image data arranged in the space dimension for the PR type 3D display panel.

The 3D display panel 330 is usually operated at 120Hz, higher than the normal operational frequency 60Hz of the SOC chip 310. Therefore, the bandwidth between the adaptive timing controller 320 and the 3D display panel 330 has to at least be 120Hz, higher than that of the SOC chip 310. Hence, for the bandwidth reason, it is more suitable to perform data conversion at the timing controller stage than at the SOC chip stage, thus the bandwidth between the SOC chip and the panel module is saved and an original cheaper SOC chip may be still utilized.

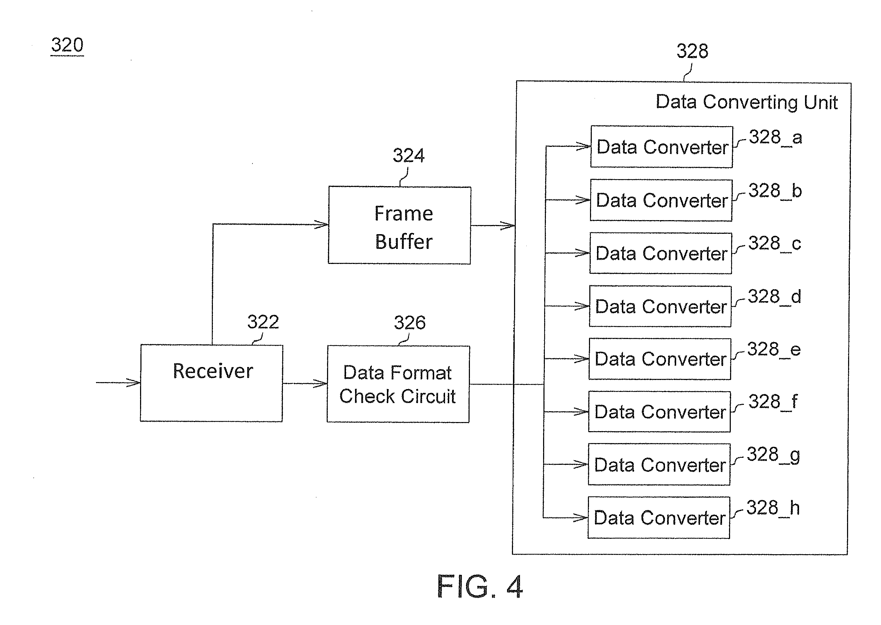

Referring to FIG. 4, a brief function block diagram of an adaptive timing controller according to an embodiment is shown. The adaptive timing controller 320 includes a receiver 322, a frame buffer 324, a data format check circuit 326 and a data converting unit 328. The receiver 322 receives image data of one image frame transmitted from the SOC chip 310. The adaptive timing controller 320 stores the image data of one image frame in the frame buffer 324. Then the data format check circuit 326 detects display types of the image data and the 3D display panel 330. The data format check circuit 326 may detect which kind of the data format of the image data is through an I2C bus, LVDS reserved bits or a TTL bus, but it is not limited thereto. Then the data format check circuit 326 decides to use which kind of data converter. Afterwards, the image data stored in the frame buffer 324 is transmitted to the decided data converter corresponding to the data format (display type) of the image data and the display type of the 3D display panel 330. The data converting unit 328 substantially rearranges the image data into rearranged image data corresponding to the display type of the 3D display panel, the rearranged image corresponding to the frame sequential data format for the shutter glasses type 3D display panel, or the line alternative data format for the PR type 3D display panel, for example.

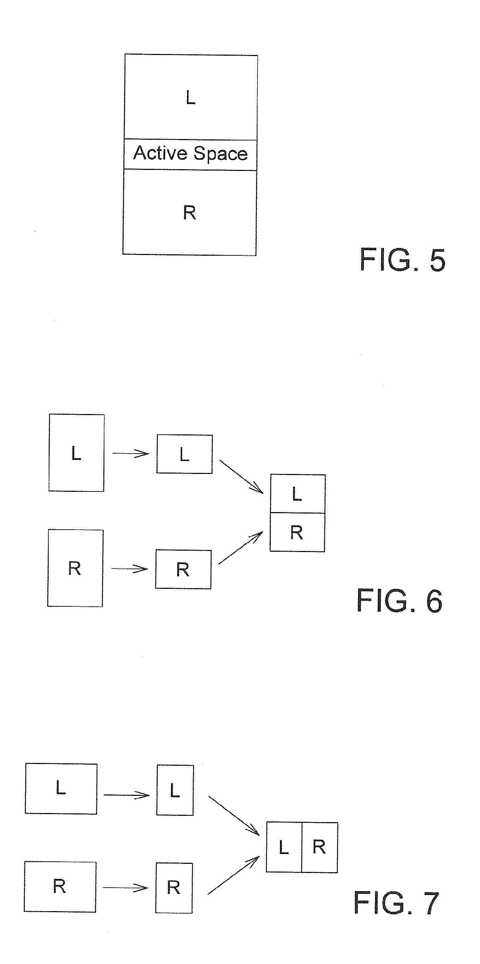

For example, if the data format of the image data is line alternative data format and the 3D display panel 330 is a shutter glasses type 3D display panel, the image data is transmitted to the data converter 328_a. Thus the line alternative data format image data is transferred into the frame sequential data format rearranged image data corresponding to the shutter glasses type. If the data format of the image data is frame packing data format (as shown in FIG. 5) and the 3D display panel is a shutter glasses type 3D display panel, the image data is transmitted to the data converter 328_b. Thus the frame packing data format image data is transferred into the frame sequential data format rearranged image data corresponding to the shutter glasses type. If the data format of the image data is Top-Bottom data format (as shown in FIG. 6) and the 3D display panel is a shutter glasses type 3D display panel, the image data is transmitted to the data converter 328_c. Thus the Top-Bottom data format image data is transferred into the frame sequential data format rearranged image data corresponding to the shutter glasses type. If the data format of the image data is side by side data format (as shown in FIG. 7) and the 3D display panel is a shutter glasses type 3D display panel, the image data is transmitted to the data converter 328_d. Thus the side by side data format image data is transferred into the frame sequential data format rearranged image data corresponding to the shutter glasses type.

Following the process of reasoning, if the data format of the image data is frame sequential data format and the 3D display panel is a PR type 3D display panel, the image data is transmitted to the data converter 328_e. Thus the frame sequential data format image data is transferred into the line alternative data format rearranged image data corresponding to the PR type. If the data format of the image data is frame packing data format (as shown in FIG. 5) and the 3D display panel is a PR type 3D display panel, the image data is transmitted to the data converter 328_f. Thus the frame packing data format image data is transferred into the line alternative data format rearranged image data corresponding to the PR type. If the data format of the image data is Top-Bottom data format (as shown in FIG. 6) and the 3D display panel is a PR type 3D display panel, the image data is transmitted to the data converter 328_g. Thus the Top-Bottom data format image data is transferred into the line alternative data format rearranged image data corresponding to the PR type. If the data format of the image data is side by side data format (as shown in FIG. 7) and the 3D display panel is a PR type 3D display panel, the image data is transmitted to the data converter 328_h. Thus the side by side data format image data is transferred into the line alternative data format rearranged image data corresponding to the PR type.

In actual design and application, the function of the adaptive timing controller 320 proposed above may be fixed to only transfer image data with one type of data format into image data with another type of data format. Moreover, the adaptive timing controller 320 may also be designed to transfer image data with anyone type of data format into image data with any other type of data format.

The disclosure further proposes a driving method of an adaptive timing controller. The adaptive timing controller includes a receiver, a frame buffer, a data format check circuit and a data converting unit. The driving method includes the following steps. The receiver is utilized to receive image data of an image frame. The frame buffer is utilized to temporarily store the image data. The data format check circuit is utilized to detect display types of the image data and a 3D display panel. The data converting unit is utilized to rearrange the image data into rearranged image data corresponding to the display type of the 3D display panel.

The detailed principles of the above driving method of the adaptive timing controller have been described in FIG. 3 to FIG. 7 and related contents, so detailed description thereof will be omitted.

The adaptive timing controller and the driving method thereof proposed in the disclosure can convert different data formats of different display types in the space dimension into a target data format of a target display type in the time dimension; meanwhile, the adaptive timing controller and the driving method thereof can also convert different data formats of different display types in the time/space dimension into a target data format of a target display type in the space dimension. Thus different type display panels can work corresponding to image data with different data formats. That is, different type display panels can work with different type SOC chips. Moreover, because the data converting is performed at the timing controller stage, the bandwidth between the SOC chip and the panel module (the adaptive timing controller) is saved and an original cheaper SOC chip may be still utilized, so as the manufacturers can select display panels of different display types with flexibility.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An adaptive timing controller (320), comprising:
a receiver (322) for receiving image data of an image frame;
a frame buffer (324) for temporarily storing the image data;
a data format check circuit (326) for detecting display types of the image data and a 3D display panel; and
a data converting unit (328) for rearranging the image data into rearranged image data corresponding to the display type of the 3D display panel.

2. The adaptive timing controller according to claim 1, wherein the data converting unit comprises a first data converter (328_a) for rearranging the image data corresponding to a first display type into the rearranged image data corresponding to a second display type when the data format check circuit (326) determines that the display type of the image data is the first display type, and the display type of the 3D display panel is the second display type.

3. The adaptive timing controller according to claim 2, wherein the data converting unit comprises a second data converter (328_b) for rearranging the image data corresponding to a third display type into the rearranged image data corresponding to the second display type when the data format check circuit (326) determines that the display type of the image data is the third display type, and the display type of the 3D display panel is the second display type.

4. The adaptive timing controller according to claim 2, wherein the data converting unit comprises a third data converter (328_c) for rearranging the image data corresponding to the first display type into the rearranged image data corresponding to a fourth display type when the data format check circuit (326) determines that the display type of the image data is the first display type, and the display type of the 3D display panel is the fourth display type.

5. The adaptive timing controller according to one of the preceding claims, wherein the data converting unit (328) rearranges the image data in a space dimension into the rearranged image data in a time dimension.

6. The adaptive timing controller according to one of the preceding claims, wherein the data converting unit (328) rearranges the image data in a time/space dimension into the rearranged image data in a space dimension.

7. The adaptive timing controller according to one of the preceding claims, wherein the data format check circuit (326) identifies the display type of the image data via an I2C bus, LVDS reserved bits or a TTL bus.

8. A driving method of an adaptive timing controller (320), which comprises a receiver (322), a frame buffer (324), a data format check circuit (326) and a data converting unit (328), the driving method comprising:
utilizing the receiver (322) to receive image data of an image frame;
utilizing the frame buffer (324) to temporarily store the image data;
utilizing the data format check circuit (326) to detect display types of the image data and a 3D display panel; and
utilizing the data converting unit (328) to rearrange the image data into rearranged image data corresponding to the display type of the 3D display panel.

9. The driving method of an adaptive timing controller according to claim 8, wherein the data converting unit comprises a first data converter (328_a), the driving method further comprising:
utilizing the first converter to rearrange the image data corresponding to a first display type into the rearranged image data corresponding to a second display type when the data format check circuit determines that the display type of the image data is the first display type, and the display type of the 3D display panel is the second display type.

10. The driving method of an adaptive timing controller according to claim 9, wherein the data converting unit comprises a second data converter (328_b), the driving method further comprising:
utilizing the second data converter to rearrange the image data corresponding to a third display type into the rearranged image data corresponding to the second display type when the data format check circuit determines that the display type of the image data is the third display type, and the display type of the 3D display panel is the second display type.

11. The driving method of an adaptive timing controller according to claim 9, wherein the data converting unit comprises a third data converter (328_c), the driving method further comprising:
utilizing the third data converter to rearrange the image data corresponding to the first display type into the rearranged image data corresponding to a fourth display type when the data format check circuit determines that the display type of the image data is the first display type, and the display type of the 3D display panel is the fourth display type.

12. The driving method of an adaptive timing controller according to one of claims 8-11, wherein the image data in a space dimension is rearranged by the data converting unit (328) into the rearranged image data in a time dimension.

13. The driving method of an adaptive timing controller according to one of claims 8-12, wherein the image data in a time/space dimension is rearranged by the data converting unit (328) into the rearranged image data in a space dimension.

14. The driving method of an adaptive timing controller according to one of claims 8-13, wherein the data format check circuit (326) identifies the display type of the image data via an I2C bus, LVDS reserved bits or a TTL bus.
